# EUROPEAN PATENT SPECIFICATION

(11) **EP 2 668 801 B1**
(45) Date of publication and mention of the grant of the patent: **25.06.2014**
(21) Application number: 12703204.3
(22) Date of filing: 26.01.2012
(51) Int. Cl.: H04W 4/18, H04W 84/12

(54) **SYSTEMS AND METHODS FOR COMMUNICATING IN A NETWORK**
SYSTEME UND VERFAHREN ZUR KOMMUNIKATION IN EINEM NETZWERK
SYSTÈME ET PROCÉDÉS POUR COMMUNIQUER AU SEIN D'UN RÉSEAU

(30) Priority: 26.01.2011 US 201161436481 P; 25.01.2012 US 201213358326
(43) Date of publication of application: 04.12.2013
(73) Proprietor: Qualcomm Incorporated, San Diego, CA 92121 (US)
(72) Inventor: TAGHAVI NASRABADI, Mohammad Hossein, San Diego, California 92121 (US); ABRAHAM, Santosh Paul, San Diego, California 92121 (US); SAMPATH, Hemanth, San Diego, California 92121 (US)
(74) Representative: Schmidbauer, Andreas Konrad
(86) International application number: PCT/US2012/022793
(87) International publication number: WO 2012/103381

(56) References cited:
- EP-A1- 2 234 453
- EP-A2- 1 594 284
- WO-A1-2005/039105
- WO-A1-2005/091540
- WO-A1-2005/112355
- US-A1- 2009 034 526
- US-A1- 2009 279 488
- US-A1- 2011 007 755

## Description

### BACKGROUND

### Field

The present application relates generally to communications, and more specifically to methods and wireless devices to enable compressed media access control headers and frame check sequences for wireless local area network (WLAN) systems.

### Background

In many telecommunication systems, communications networks are used to exchange messages among several interacting spatially-separated devices. Networks may be classified according to geographic scope, which could be, for example, a metropolitan area, a local area, or a personal area. Such networks would be designated respectively as a wide area network (WAN), metropolitan area network (MAN), local area network (LAN), or personal area network (PAN). Networks also differ according to the switching/routing technique used to interconnect the various network nodes and devices (e.g. circuit switching vs. packet switching), the type of physical media employed for transmission (e.g. wired vs. wireless), and the set of communication protocols used (e.g. Internet protocol suite, SONET (Synchronous Optical Networking), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

The devices in a wireless network may transmit/receive data packets between each other. These data packets include overhead data (e.g., header information, data verification code, etc.) that helps in routing the packet through the network, identifying the data in the packet, etc.

In some systems the data packets to be transmitted may have a small payload in that they only carry a small amount of data. In such cases, typical overhead data may comprise a large portion of the data packet, which may unnecessarily increase the overhead required for transmitting the payload in a data packet.

Thus, enhanced systems and methods of decreasing the overhead in data packets are needed.

Attention is drawn to US 2009/0279488 Al, describing an apparatus that includes a wireless receiver configured to receive a persistent resource allocation, the persistent resource allocation providing a periodically recurring resource, and a wireless transmitter configured to transmit a persistent data burst in a first frame via the persistent resource allocation, the persistent data burst including a compressed MAC (media access control) header that excludes (or omits) a connection identifier (CID) field wherein the compressed MAC header of the persistent data burst includes a field that indicates that the MAC header of the persistent data burst is compressed.

Attention is drawn to US 2009/0034526 Al, describing a packet data structure comprising a compressed medium access control (MAC) header structure capable of significantly reducing MAC header overhead for small payload applications, such as Voice over Internet Protocol (VoIP) and interactive gaming and to increase the capacity of such applications. In various implementations, the packet data structure may be used in mobile Worldwide Interoperability for MicrowaveAccess (WiMAX) systems designed to operate in accordance with the Institute for Electronic and Electrical Engineers (IEEE) standards such as the 802.16e-2005 standard and/or the evolving IEEE 802.16m standard.

### Summary

In accordance with the present invention methods and wireless devices for wireless communications as set forth in the independent claims are provided. Preferred embodiments are described in the dependent claims.

The systems, methods, and devices of the invention each have several aspects, no single one of which is solely responsible for its desirable attributes. Without limiting the scope of this invention as expressed by the claims which follow, some features will now be discussed briefly. After considering this discussion, and particularly after reading the section entitled "Detailed Description" one will understand how the features of this invention provide advantages that include decreasing the overhead in transmitting payloads in data packets.

One aspect of the disclosure provides an apparatus for wireless communication. The apparatus comprises a processing system configured to generate a data packet. The data packet comprises a header. The header comprises a first field indicating the header is a compressed header. The apparatus further comprises a transmitter configured to transmit the data packet to a wireless node.

Another aspect of the disclosure provides an apparatus for wireless communication. The apparatus comprises a receiver configured to receive a data packet from a device. The apparatus further comprises a processing system configured to determine whether the data packet comprises a compressed header based on a first field of the header. The processing system is further configured to, if the header is a compressed header, process data received in the data packet according to a data packet format associated with the compressed header.

Another aspect of the disclosure provides a method for wireless communication. The method comprises generating a data packet, the data packet comprising a header, the header comprising a first field indicating the header is a compressed header. The method further comprises transmitting the data packet to a wireless node.

Another aspect of the disclosure provides a method for wireless communication. The method comprises receiving a data packet from a device. The method further comprises determining whether the data packet comprises a compressed header based on a first field of the header. The method further comprises processing, if the header is a compressed header, data received in the data packet according to a data packet format associated with the compressed header.

Another aspect of the disclosure provides an apparatus for wireless communication. The apparatus comprises means for generating a data packet, the data packet comprising a header, the header comprising a first field indicating the header is a compressed header. The apparatus further comprises means for transmitting the data packet to a wireless node.

Another aspect of the disclosure provides an apparatus for wireless communication. The apparatus comprises means for receiving a data packet from a device. The apparatus further comprises means for determining the data packet comprises a compressed header based on a first field of the header. The apparatus further comprises means for processing, if the header is a compressed header, data received in the data packet according to a data packet format associated with the compressed header.

Another aspect of the disclosure provides a computer program product for wirelessly communicating comprising a computer readable medium comprising instructions. The instructions when executed cause an apparatus to generate a data packet, the data packet comprising a header, the header comprising a first field indicating the header is a compressed header. The instructions when executed further cause the apparatus to transmit the data packet to a wireless node.

Another aspect of the disclosure provides a computer program product for wirelessly communicating comprising a computer readable medium comprising instructions. The instructions when executed cause an apparatus to receive a data packet from a device. The instructions when executed further cause the apparatus to determine whether the data packet comprises a compressed header based on a first field of the header. The instructions when executed further cause the apparatus to process, if the header is a compressed header, data received in the data packet according to a data packet format associated with the compressed header.

Another aspect of the disclosure provides an access terminal. The access terminal comprises an antenna. The access terminal further comprises a processing system configured to generate a data packet. The data packet comprises a header. The header comprises a first field indicating the header is a compressed header. The access terminal further comprises a transmitter configured to transmit the data packet to a wireless node via the antenna.

Another aspect of the disclosure provides an access terminal. The access terminal comprises an antenna. The access terminal further comprises a receiver configured to receive a data packet from a device via the antenna. The access terminal further comprises a processing system configured to determine whether the data packet comprises a compressed header based on a first field of the header. The processing system is further configured to process, if the header is a compressed header, data received in the data packet according to a data packet format associated with the compressed header.

### BRIEF DESCRIPTION OF THE DRAWINGS

FIG. 1 illustrates an example of a wireless communication system in which aspects of the present disclosure may be employed.
FIG. 2 illustrates various components that may be utilized in a wireless device that may be employed within the wireless communication system of FIG. 1.
FIG. 3 illustrates an example of a data packet.
FIG. 4 illustrates an example of the frame control field of the data packet of FIG. 3.
FIG. 5 illustrates an aspect of a method for generating and transmitting compressed headers in data packets.
FIG. 6 illustrates an aspect of a method for receiving and processing data packets with compressed headers.
FIG. 7 is a functional block diagram of another exemplary wireless device that may be employed within the wireless communication system of FIG. 1.
FIG. 8 is a functional block diagram of yet another exemplary wireless device that may be employed within the wireless communication system of FIG. 1.

### DETAILED DESCRIPTION

Various aspects of the novel systems, apparatuses, and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects.

Popular wireless network technologies may include various types of wireless local area networks (WLANs). A WLAN may be used to interconnect nearby devices together, employing widely used networking protocols. The various aspects described herein may apply any communication standard, such as WiFi or, more generally, any member of the IEEE 802.11 family of wireless protocols. For example, the various aspects described herein may be used as part of the IEEE 802.11ah protocol, which uses sub-1 GHz bands.

In some exemplary implementations, a WLAN includes various devices which are the components that access the wireless network. For example, there may be two types of devices: access points ("APs") and clients (also referred to a stations, or "STAs"). In general, an AP serves as a hub or base station for the WLAN and a STA serves as a user of the WLAN. For example, a STA may be a laptop computer, a personal digital assistant (PDA), a mobile phone, etc. In an example, a STA connects to an AP via a WiFi (e.g., IEEE 802.11 protocol) compliant wireless link to obtain general connectivity to the Internet or to other wide area networks. In some implementations a STA may also be used as an AP.

An access point ("AP") may also comprise, be implemented as, or known as NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless or wired medium.

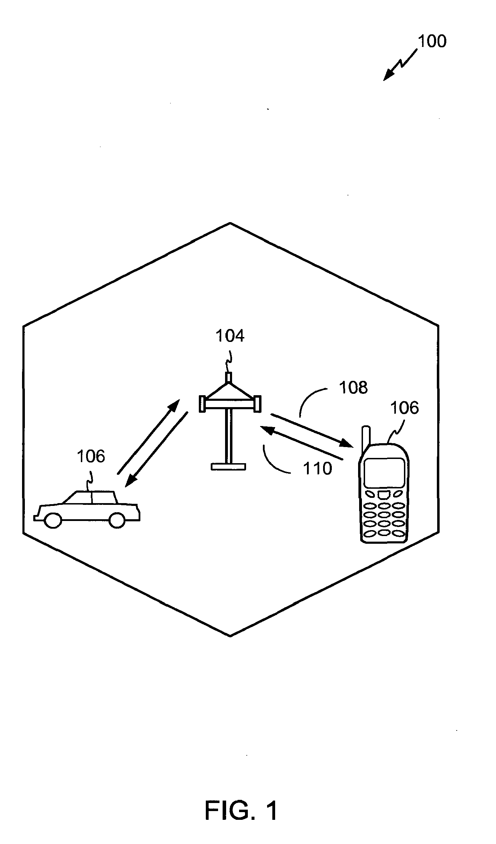

FIG. 1 illustrates an example of a wireless communication system 100 in which aspects of the present disclosure may be employed. The wireless communication system 100 may be a WLAN system. The wireless communication system 100 may include an AP 104, which communicates with STAs 106.

A variety of processes and methods may be used for transmissions in the wireless communication system 100 between the AP 104 and the STAs 106. For example, signals may be sent and received between the AP 104 and the STAs 106 in accordance with OFDM/OFDMA techniques. If this is the case, the wireless communication system 100 may be referred to as an OFDM/OFDMA system. Alternatively, signals may be sent and received between the AP 104 and the STAs 106 in accordance with CDMA techniques. If this is the case, the wireless communication system 100 may be referred to as a CDMA system.

A communication link that facilitates transmission from an AP 104 to a STA 106 may be referred to as a downlink (DL) 108, and a communication link that facilitates transmission from a STA 106 to an AP 104 may be referred to as an uplink (UL) 110. Alternatively, a downlink 108 may be referred to as a forward link or a forward channel, and an uplink 110 may be referred to as a reverse link or a reverse channel.

The AP 104 may act as a base station and provide wireless communication coverage in a basic service area (BSA) 102. The AP 104 along with the STAs 106 associated with the AP 104 and that use the AP 104 for communication are referred to as a basic service set (BSS). In order to form the BSS, the AP 104 and STAs 106 may perform an association process. During the association process, the devices exchange information in order to properly communicate with one another. For example, device identifiers may be exchanged so that devices can direct data packets to the correct address. Further, the devices may exchange capability information that states what functions the device is capable of performing. For example, the capability information may include information that indicates the type of information a given device is able to process. The capability information may be exchanged in a capability information element of a data packet that is exchanged between devices. Where there are multiple wireless communication networks setup, a given BSS is identified by a BSS identifier (BSSID). The BSSID may be the MAC address of the AP 104. It should be noted that the wireless communication system 100 may not have a central AP 104, but rather functions as a peer-to-peer network between STAs 106. Accordingly, the functions of the AP 104 described herein may alternatively be performed by one or more STAs 106.

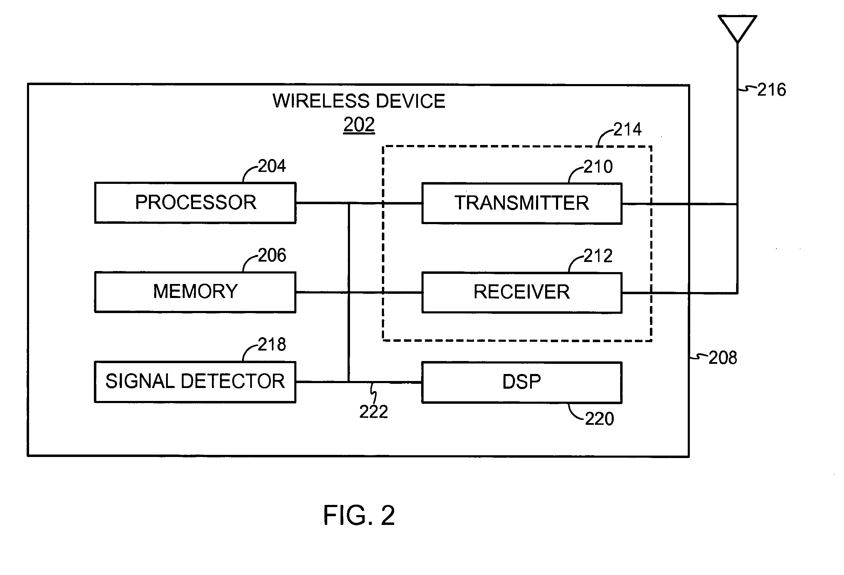

FIG. 2 illustrates various components that may be utilized in a wireless device 202 that may be employed within the wireless communication system 100. The wireless device 202 is an example of a device that may be configured to implement the various methods described herein. The wireless device 202 may be an AP 104 or a STA 106.

The wireless device 202 may include a processor 204 which controls operation of the wireless device 202. The processor 204 may also be referred to as a central processing unit (CPU). Memory 206, which may include both read-only memory (ROM) and random access memory (RAM), provides instructions and data to the processor 204. A portion of the memory 206 may also include non-volatile random access memory (NVRAM). The processor 204 typically performs logical and arithmetic operations based on program instructions stored within the memory 206. The instructions in the memory 206 may be executable to implement the methods described herein.

The processor 204 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 202 may also include a housing 208 that may include a transmitter 210 and a receiver 212 to allow transmission and reception of data between the wireless device 202 and a remote location. The transmitter 210 and receiver 212 may be combined into a transceiver 214. An antenna 216 may be attached to the housing 208 and electrically coupled to the transceiver 214. The wireless device 202 may also include (not shown) multiple transmitters, multiple receivers, multiple transceivers, and/or multiple antennas.

The wireless device 202 may also include a signal detector 218 that may be used in an effort to detect and quantify the level of signals received by the transceiver 214. The signal detector 218 may detect such signals as total energy, energy per subcarrier per symbol, power spectral density and other signals. The wireless device 202 may also include a digital signal processor (DSP) 220 for use in processing signals.

The various components of the wireless device 202 may be coupled together by a bus system 222, which may include a power bus, a control signal bus, and a status signal bus in addition to a data bus.

The AP 104 and the STA 106 may exchange data in the form of data packets (e.g., 802.11 MAC protocol data unit (MPDU)). These data packets may include a header (e.g., MAC header) and data verification code (e.g., cyclic redundancy check (CRC) data, frame check sequence (FCS) data, etc.). The data packets also include a frame body, which contains the actual payload or data to be sent from one device to another. In some cases, the data packets to be exchanged may include a small payload (e.g., less than 100 bytes of data). This may occur where little data is to be transferred, such as data (e.g., temperature data) related to sensors, metering, or smartgrids. In such cases, a reduced header and/or data verification code size is preferred such that the overall size of the data packet is reduced. The systems, methods, and devices herein discuss compressed headers and FCSs that may be used to decrease the overall packet size of data packets, while still being compatible with existing systems, such as 802.11ah protocol WLAN systems. The data packets with such reduced header and/or data verification code size may have different data packet formats. Each data packet format may refer to the arrangement of data and types of data contained in the data packet.

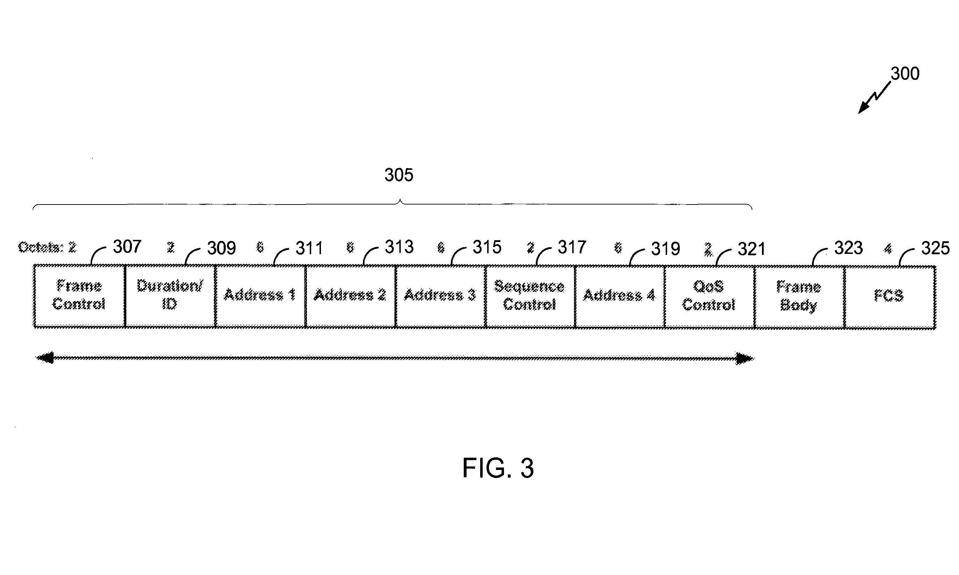

FIG. 3 illustrates an example of a data packet 300. The data packet 300 includes an uncompressed header 305. The header 305, when uncompressed, includes the conventional fields of an MPDU such as such as described in IEEE Std 802.11™-2007, IEEE Standard for Information technology - Telecommunications and information exchange between systems - Local and metropolitan area networks - Specific requirements - Part 11: Wireless LAN Medium Access Control (MAC) and Physical Layer (PHY) Specifications (see pg. 60). For example, when uncompressed, the header 305 includes a frame control field 307 having a size of 2 octets, a duration/identifier field 309 having a size of 2 octets, an "address 1" field 311 having a size of 6 octets, an "address 2" field 313 having a size of 6 octets, an "address 3" field 315 having a size of 6 octets, a sequence control field 317 having a size of 2 octets, an "address 4" field 319 having a size of 6 octets, and a quality of service (QoS) control field 321 having a size of 2 octets. The data packet 300 further includes a frame body field 323, which contains the payload. The data packet 300 further includes an FCS field 325 having a size of 4 octets, where the FCS field 325 includes the data verification code. The following description discusses how the header 305 and/or the FCS field 325 may be compressed to reduce the overall size of the data packet 300.

Before transmitting a data packet with a compressed header from a first device (e.g., AP 104a or STA 106) to a second device (e.g., AP 104a or STA 106), it may be desirable to determine whether the second device is capable of processing data packets with a compressed header. In order to do this, the first device may exchange capability information that indicates whether the second device can process data packets with a particular type of compressed header or not with the second device. The capability information may be included in a subfield of a capability information element of a data packet. The exchange of information may be part of a negotiation process, where the first device requests transmission of data packets with a particular type of compressed header to the second device. The second device may allow transmission of such data packets if it is capable of processing such packets. Alternatively, the second device may indicate to the first device that it cannot receive such data packets. Alternatively or additionally, the capability information may be exchanged during an association process between the devices. Further, alternatively or additionally, the capability information may be exchange between the devices at some other time.

In order to properly interpret the data in a data packet using compressed headers, it may be necessary to indicate in the data packet that a compressed header is being used as opposed to an uncompressed header. In one aspect, the data in the frame control field 307 of the data packet 300 is used to indicate whether or not the header 305 and/or the FCS field 325 are compressed.

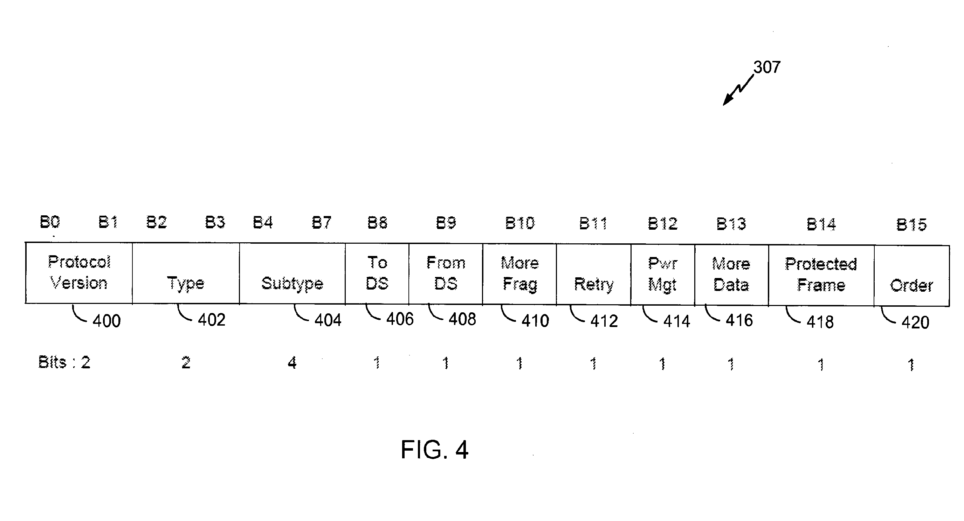

FIG. 4 illustrates an example of the frame control field of the data packet of FIG. 3. The frame control field 307 includes a plurality of subfields such as the conventional subfields of an MPDU such as described in IEEE Std 802.11™-2007, IEEE Standard for Information technology - Telecommunications and information exchange between systems - Local and metropolitan area networks - Specific requirements - Part 11: Wireless LAN Medium Access Control (MAC) and Physical Layer (PRY) Specifications (see pg. 60). These subfields include a protocol version field 400, a type field 402, a subtype field 404, a "to distribution system (DS)" field 406, a "from DS" field 408, a "more fragments" field 410, a retry field 412, a power management field 414, a "more data" field 416, a protected frame field 418, and an order field 420. One or more of these subfields of the frame control field 307 can be used to indicate that the data packet 300 has a compressed header 305 and/or compressed FCS field 325. For example, a particular combination of bits in one or more of the subfields of the frame control field 307 may indicate that the data packet 300 has a compressed header 305 and/or FCS field 325. In one aspect, if the protocol version field 400 has a certain bit combination (e.g., a bit combination other than 00) the data packet 300 includes a compressed header. Additionally or alternatively, the values of one or more of the more fragmentation field 410, the more data field 416, and the order field 420 is used to indicate whether the data packet 300 has a compressed header.

In an uncompressed header 305, one of the address fields 311, 313, 315, and 319 contains the basic service set identifier (BSSID) of the BSS within which the data packet 300 is to be communicated by the AP 104 or the STA 106. The BSSID is used to indicate, to the device, the BSS with which the data packet 300 is associated. Without such information, a device receiving the data packet does not have information that indicates whether the data packet is relevant to the BSS the device is a part of, or is not relevant.

In one aspect, the header 305 is compressed by replacing the BSSID in the address field 311, 313, 315, or 319 that contains the BSSID information with a hashed version of the BSSID (e.g., hashed from 6-bytes to 2-bytes). Accordingly, the header 305 is compressed by the reduction in size of the address field. The device receiving the data packet 300 with the compressed header can still determine whether the data packet 300 is for the BSS to which the device belongs by determining whether the hashed BSSID corresponds to the hash of the BSSID of the BSS to which the device belongs. It should be noted that by utilizing a hashed BSSID, there is a chance that more than one BSSID may hash to the same hashed BSSID. Accordingly, a device may infer that the data packet 300 is for the BSS to which the device belongs even when it does not. Such conflicts, however, should be rare. In one implementation, if a receiving device detects a conflict such as through erratic performance, the receiving device and/or the transmitting device may reassign the BSSID of the BSS affected in order to achieve normal behavior.

In some aspects, the header 305 is compressed by removing the address field 311, 313, 315, or 319 that contains the BSSID information. Further, the FCS field 325 is scrambled (e.g., an XOR is performed between the FCS and the BSSID) using the BSSID information as part of the data verification code. Accordingly, a device receiving the data packet 300 with the compressed header can still determine whether the data packet 300 is for the BSS to which the device belongs by determining the BSSID information from the FCS field 325. Alternatively, the FCS field 325 is scrambled with a hashed version of the BSSID (e.g., hashed from 6-bytes to 2-bytes).

Further, in an uncompressed header 305, each one of the address fields 311,313, 315, and 319 may indicate one of the following: the source address of the STA 106 from which the data packet 300 is sent, the destination address of the STA 106 to which the data packet 300 is sent, the forwarding address of the STA 106 to which the destination STA 106 should send the data packet 300, etc. Each of these STAs 106 addresses may comprise a MAC address of the particular STA 106 in an uncompressed header. The MAC address may normally have a length of 6-bytes.

In one aspect, a compressed header may replace the MAC addresses of STAs 106 in one or more of the address fields 311, 313, 315, and 319 with an association identifier (AID) that the AP 104 assigns to each STA 106 in its BSS. The AID may be shorter (e.g., 2-bytes) than the MAC address. The AP 104 assigns a unique AID to each STA 106. Accordingly, within the BSS of the AP 104, each STA 106 has a unique AID that uniquely identifies the device. The AIDs of STAs 106 may conflict across different BSSs. However, by utilizing the BSSID information in the data packet 300, it can first be determined to which BSS the data packet 300 belongs. Thus, the AID information is sufficient to identify a particular STA 106.

In some aspects, the header 305 is compressed by removing the MAC addresses of STAs 106 in one or more of the address fields 311, 313, 315, and 319. Further, the FCS field 325 is scrambled (e.g., an XOR is performed between the FCS and the MAC address or AID) using the MAC address or AID information of the address field that is removed as part of the data verification code. Accordingly, a device receiving the data packet 300 with the compressed header can still determine the address field information of the address field removed based on the information from the FCS field 325. Alternatively, the FCS field 325 is scrambled with a hashed version of the MAC address or AID (e.g., hashed from 6-bytes to 2-bytes).

In some aspects, when the BSSID information or other information from one of address fields 311, 313, 315, and 319 is removed as discussed above, additional information may be scrambled with the FCS field 325 such that a receiving device can determine whether the received data packet is destined for a device in the BSS of the receiving device. The additional information may comprise a random key with a value that is unique to the BSS of the device for which the data packet is destined. They key may be received by devices as part of a beacon that is sent to devices in the BSS, periodically or aperiodically. Further, the random key may change over time, thus reducing the likelihood that neighboring BSSs are using the same key.

In yet another aspect, the header 305 can be compressed by reducing the size of the sequence control field 317. The sequence control field 317 is used to indicate the sequence number of the data packet 300 with respect to other packets sent to a device. In one aspect, the sequence control field 317 is eliminated. In such aspects, data packets cannot be associated with sequence numbers. However, this may not be needed in all use cases, such as where the data packets are associated with sensor data. In another aspect, the sequence control field is reduced in size (e.g., to 1-byte). Accordingly, the number of data packets that can be made part of a given sequence is reduced.

In yet another aspect, the header 305 can be compressed by reducing (truncating) the size of the FCS field 325 (e.g., to 2-bytes). A smaller (truncated) data verification code size may be sufficient for detecting errors in smaller payloads. In one aspect, the device generating the data packet 300 may use existing 4-byte FCS generators to generate a 4-byte FCS and only transmit 2-bytes of the FCS in order to allow existing hardware to be utilized.

One of ordinary skill in the art should recognize that various compression techniques for the header 305 as discussed above may be used in combination. For example, the FCS field may be scrambled with any combination of MAC addresses, AIDs, BSSID, random keys, etc. Further, a device may configurably implement one or more of the compression techniques, alone or in combination. The device may automatically and/or manually (e.g., through user input) determine which compression technique to use. In order to identify in the data packet 300 which compression technique is used, the frame control field 307 may be configured to use different combinations of bits, each combination identifying a different compression technique. For example, if the protocol version field 400 has a first bit combination (e.g., 01) the data packet 300 includes a compressed header using a first compression technique. If the protocol version field 400 has a second bit combination (e.g., 10) the data packet 300 includes a compressed header using a second compression technique. Additionally or alternatively, the values of one or more of the more fragmentation field 410, the more data field 416, and the order field 420 is used to indicate whether the data packet 300 has a compressed header and the type of compression technique used.

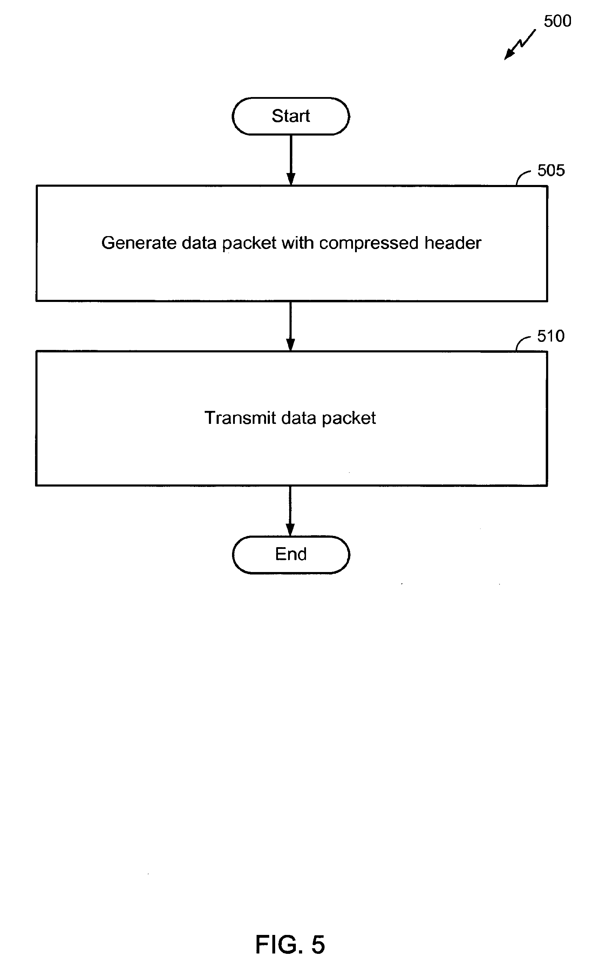

FIG. 5 illustrates an aspect of a method 500 for generating and transmitting compressed headers in data packets. The method 500 may be used to generate data packets 300 with compressed headers 305. The data packets 300 may be generated at a first STA 106 and transmitted to a second STA 106. Although the method 500 below is described with respect to elements of the wireless device 202, those of skill in the art will appreciate that other components may be used to implement one or more of the steps described herein.

At a step 505 the wireless device 202 generates a data packet with a compressed header. The header may be compressed using one or more of the techniques described herein with respect to FIG. 3. At a step 510, the wireless device 202 transmits the generated data packet to another device.

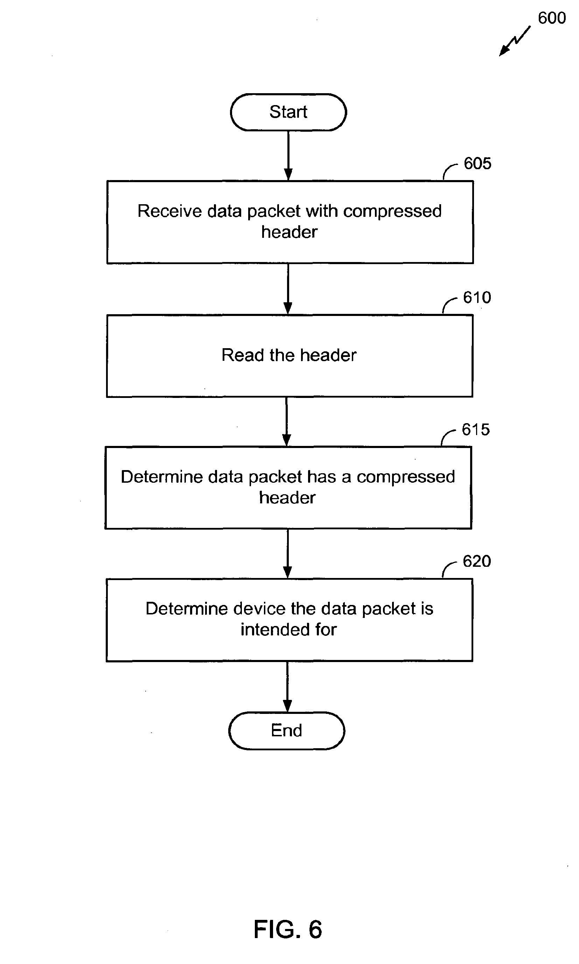

FIG. 6 illustrates an aspect of a method for receiving and processing data packets with compressed headers. The method 600 may be used to process data packets 300 with compressed headers 305. The data packets 300 may be generated at a first STA 106 and received at a second STA 106. Although the method 600 below is described with respect to elements of the wireless device 202, those of skill in the art will appreciate that other components may be used to implement one or more of the steps described herein.

At a step 605 the wireless device 202 receives a data packet with a compressed header. The header may be compressed using one or more of the techniques described herein with respect to FIG. 3. At a step 610, the wireless device 202 reads the header of the packet. Further, at a step 615 the wireless device 202 determines the data packet is a compressed header such as by determining that the frame control field of the data packet indicates the header is a compressed header. Continuing at a step 620, the wireless device 202 determines for which device the packet is intended. For example, the wireless device 202 may read the information in an address field. Alternatively or additionally, the wireless device 202 descrambles the FCS field of the data packet which includes such information.

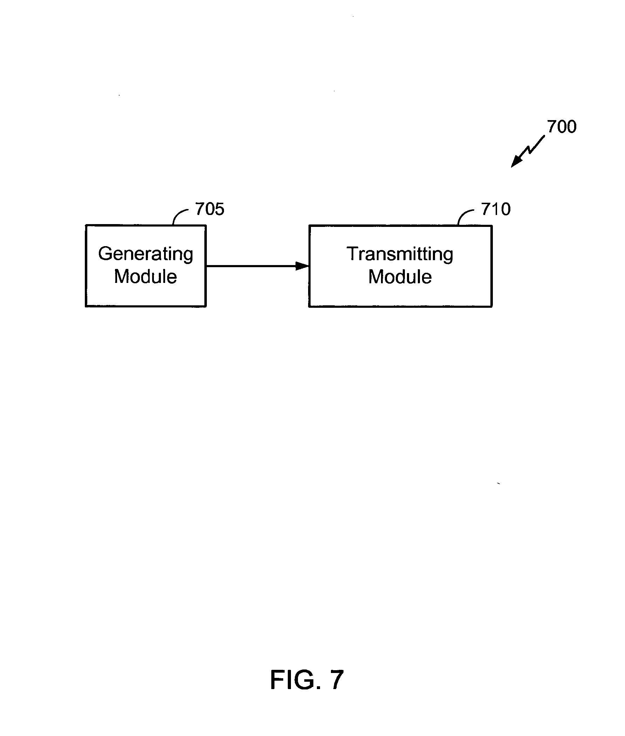

FIG. 7 is a functional block diagram of another exemplary wireless device that may be employed within the wireless communication system of FIG. 1. Device 700 comprises a generating module 705 for generating a data packet having a compressed header as discussed herein. The generating module 705 may correspond to the processor 204 of the wireless device 202. The device 700 further comprises a transmitting module 710 for transmitting the data packet to another device. The transmitting module 710 may correspond to the transmitter 210 of the wireless device 202.

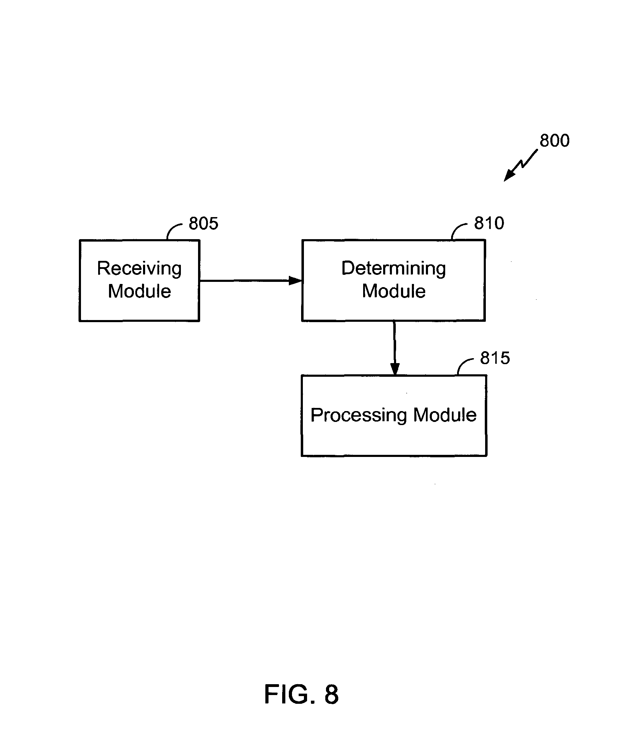

FIG. 8 is a functional block diagram of yet another exemplary wireless device that may be employed within the wireless communication system of FIG. 1. Device 800 comprises a receiving module 805 for receiving a data packet as discussed herein. The receiving module 8705 may correspond to the receiver 212 of the wireless device 202. The device 800 further comprises a determining module 810 for determining whether the data packet comprises a compressed header as discussed herein. The determining module 810 may correspond to the processor 204 of the wireless device 202. The device 800 further comprises a processing module 815 for processing the data packet based on the compressed header as discussed herein. The processing module 815 may correspond to the processor 204 of the wireless device 202.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, a phrase referring to "at least one of" a list of items refers to any combination of those items, including single members. As an example, "at least one of: *a, b,* or *c*" is intended to cover: *a*, *b*, *c*, *a-b*, *a-c*, *b-c*, *and a-b-c*.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as irifrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

## Claims

1. A method for wireless communication in a wireless local area network, WLAN, carried out by a wireless device (202), the method comprising:
negotiating transmission of data packets (300) comprising a compressed header with a wireless node based on capabilities exchanged with the wireless node and being related to processing of compressed headers, and
generating (505) a data packet, the data packet comprising a header, the header comprising a first field indicating the header is a compressed header; and
transmitting (510) the data packet to the wireless node.

2. The method of Claim 1, further comprising transmitting information indicative of a capability to transmit, receive, or transmit and receive data packets (300) comprising the compressed header during an association process with the wireless node by using a subfield in a capability information element of the header; and/or
wherein the first field comprises a frame control field, and wherein at least one subfield of the frame control field indicates the header is compressed, the at least one subfield comprising at least one of the following subfields: protocol version, more fragments, more data, or order.

3. The method of Claim 1, wherein the header comprises a second field indicative of an association identifier of a wireless device (202), and wherein the wireless device (202) is one of the following: a wireless device (202) and the wireless node; and/or
wherein the header comprises at least one address field, said at least one address field comprising a hash of a basic service set identifier of the wireless node.

4. The method of Claim 1, wherein the data packet comprises a frame check sequence scrambled with data indicative of at least one of the following: a basic service set identifier of the wireless node, an address of the wireless node, an address of a wireless device (202), or a key value; and preferably
wherein the key value changes over time.

5. A method for wireless communication in a wireless local area network, WLAN, carried out by a wireless device (202), the method comprising:
negotiate reception of data packets (300) comprising a compressed header with a device based on capabilities exchanged with the device and being related to processing of compressed headers; and
receiving (605) a data packet from the device;
determining (615) whether the data packet comprises a compressed header based on a first field of the header; and
if the header is a compressed header, processing data (620) received in the data packet according to a data packet format associated with the compressed header.

6. The method of Claim 5, further comprising, if the header is a compressed header, processing the data packet based on the compressed header by descrambling a frame check sequence of the header to identify at least one of the following: a basic service set identifier of the device, an address of the device, an address of a wireless device (202), or a key value; and preferably
wherein the key value changes over time.

7. The method of Claim 5, further comprising determining a destination address of the data packet based on the compressed header.

8. A wireless device (700) for wireless communication in a wireless local area network, WLAN, comprising:
means for negotiating transmission of data packets (300) comprising a compressed header with a wireless node based on capabilities exchanged with the wireless node and
being related to processing of compressed headers; and
means for generating (705) a data packet, the data packet comprising a header, the header comprising a first field indicating the header is a compressed header; and
means for transmitting (710) the data packet to the wireless node.

9. The wireless device (700) of Claim 8, further comprising means for transmitting information indicative of a capability to transmit, receive, or transmit and receive data packets (300) comprising the compressed header during an association process with the wireless node by using a subfield in a capability information element of the header; and/or
wherein the first field comprises a frame control field, and wherein at least one subfield of the frame control field indicates the header is a compressed header, the at least one subfield comprising at least one of the following subfields: protocol version, more fragments, more data, or order.

10. The wireless device (700) of Claim 8, wherein the header comprises a second field indicative of an association identifier of a wireless device (202), and wherein the wireless device (202) is one of the following: the wireless device (700), the wireless node, and another wireless device (202) ; and/or
wherein the header comprises at least one address field, said at least one address field comprising a hash of a basic service set identifier of the wireless node.

11. The wireless device (700) of Claim 8, wherein the data packet comprises a frame check sequence scrambled with data indicative of at least one of the following: a basic service set identifier of the wireless node, an address of the wireless node, an address of the wireless device (700), or a key value; and preferably
wherein the key value changes over time.

12. The wireless device (202, 700) of Claim 8 or the method of Claim 1, wherein the first field indicates a frame check sequence of the data packet is truncated.

13. A wireless device (800) for wireless communication comprising in a wireless local area network, WLAN:
means for receiving (805) a data packet from a device;
means for negotiating reception of data packets (300) comprising a compressed header with the device based on capabilities exchanged with the device being related to processing of compressed headers; and
means for determining (810) whether the data packet comprises a compressed header based on a first field of the header; and
means for, if the header is a compressed header, processing (815) data received in the data packet according to a data packet format associated with the compressed header.

14. The wireless device (800) of Claim 13, wherein means for processing (815) is configured to, if the header is a compressed header, process the data packet based on the compressed header by descrambling a frame check sequence of the header to identify at least one of the following: a basic service set identifier of the device, an address of the device, an address of the wireless device (800), or a key value; and preferably wherein the key value changes over time; and/or
further comprising means for determining a destination address of the data packet based on the compressed header.

15. A computer program product for wireless communication in a wireless local area network, WLAN comprising a computer readable medium comprising instructions that when executed cause a wireless device (202) to carry out the steps of any of claims 1 - 7 or 12, when executed on a computer.

## Patentansprüche

1. Ein Verfahren für drahtlose Kommunikation in einem drahtlosen Lokalgebietsnetzwerk, WLAN = Wireless Local Area Network, das durch ein drahtloses Gerät (202) ausgeführt wird, wobei das Verfahren Folgendes aufweist:
Verhandeln von Übertragung von Datenpaketen (300), die einen komprimierten Kopf, auch Header, aufweisen, mit einem drahtlosen Knoten basierend auf Fähigkeiten, die mit dem drahtlosen Knoten ausgetauscht wurden und sich auf Verarbeiten von komprimierten Headern beziehen, und
Erzeugen (505) eines Datenpaketes, das Datenpaket weist einen Header auf, der Header weist ein erstes Feld auf, das anzeigt, dass der Header ein komprimierter Header ist; und
Übertragen (510) des Datenpakets an den drahtlosen Knoten.

2. Verfahren nach Anspruch 1, das weiterhin folgendes aufweist: Übertragen von Information, die eine Fähigkeit zum Senden, Empfangen oder Senden und Empfangen von Datenpaketen (300) anzeigt und den komprimierten Header aufweist, und zwar während eines Assoziierungsprozesses mit dem drahtlosen Knoten, durch Nutzen eines Unterfelds in einem Fähigkeitsinformationselement des Headers; und/oder
wobei das erste Feld ein Rahmensteuerfeld aufweist und wobei mindestens ein Unterfeld des Rahmensteuerfelds anzeigt, dass der Header komprimiert ist und dass mindestens ein Unterfeld mindestens eines der folgenden Unterfelder aufweist: Protokollversion, mehr Fragmente, mehr Daten, oder Reihenfolge.

3. Verfahren nach Anspruch 1, wobei der Header ein zweites Feld aufweist, das anzeigend ist für einen Assozüerungskennzeichner eines drahtlosen Gerätes (202), wobei das drahtlose Gerät (202) eines der Folgendes ist: ein drahtloses Gerät (202) und der drahtlose Knoten; und/oder
wobei der Header mindestens ein Adressfeld aufweist, wobei das mindestens eine Adressfeld einen Hashwert einen Basisdienstsatzkennzeichners, auch Basic Service Set Identifier, des drahtlosen Knotens aufweist.

4. Verfahren nach Anspruch 1, wobei das Datenpaket eine Rahmenprüfsequenz aufweist, die mit den Daten verwürfelt ist, und für mindestens eines der Folgenden anzeigend ist: einen Basisdienstsatzkennzeichner des drahtlosen Knotens, eine Adresse des drahtlosen Knotens, eine Adresse von einem drahtlosen Gerät (202) oder einen Schlüsselwert, und
wobei sich der Schlüsselwert bevorzugt über Zeit verändert.

5. Ein Verfahren für drahtlose Kommunikation in einem drahtlosen Lokalgebietsnetzwerk, WLAN = Wireless Local Area Network, das durch ein drahtloses Gerät (202) ausgeführt wird, wobei das Verfahren Folgendes aufweist:
Verhandeln von Empfang von Datenpaketen (300), die einen komprimierten Kopf, auch Header, aufweisen, mit einem Gerät basierend auf Fähigkeiten, die mit dem Gerät ausgetauscht wurden und sich auf Verarbeiten von komprimierten Headern beziehen, und
Empfangen (605) eines Datenpaketes von dem Gerät,
Bestimmen (615), ob das Datenpaket einen Header aufweist, und zwar basieren auf einem ersten Feld des Headers; und
wenn der Header ein komprimierter Header ist, Verarbeiten von Daten (620), die in dem Datenpaket empfangen wurden, und zwar gemäß einem Datenpaketformat, dass mit dem komprimierten Header assoziiert ist.

6. Verfahren nach Anspruch 5, das weiterhin folgendes aufweist:
wenn der Header ein komprimierter Header ist, Verarbeiten des Datenpakets basierend auf dem komprimierten Header durch entwürfeln einer Rahmenprüfsequenz des Headers, und zwar zum Identifizieren mindestens eines der Folgenden: eines Basisdienstsatzkennzeichners, auch Basic Service Set Identifier, des Gerätes, einer Adresse des Gerätes, einer Adresse von einem drahtlosen Gerät (202), oder eines Schlüsselwerts und, wobei sich der Schlüsselwert bevorzugt über Zeit verändert.

7. Verfahren nach Anspruch 5, dass weiterhin Bestimmen einer Zieladresse des Datenpakets basieren auf dem komprimierten Header aufweist.

8. Ein drahtloses Gerät (700) für drahtlose Kommunikation in einem drahtlosen Lokalgebietsnetzwerk, WLAN = Wireless Local Area Network, das Folgendes aufweist:
Mittel zum Verhandeln von Übertragung von Datenpaketen (300), die einen komprimierten Kopf, auch Header, aufweisen, mit einem drahtlosen Knoten basierend auf Fähigkeiten, die mit dem drahtlosen Knoten ausgetauscht wurden und auf Verarbeiten von komprimierten Headern bezogen sind; und
Mittel zum Erzeugen (705) eines Datenpakets, wobei das Datenpaket einen Header aufweist, wobei der Header ein erstes Feld aufweist, das anzeigt, dass der Header ein komprimierter Header ist; und
Mittel zum Übertragen (710) des Datenpakets an den drahtlosen Knoten.

9. Drahtloses Gerät (700) nach Anspruch 8, das weiterhin Mittel zum Übertragen von Information aufweist, die eine Fähigkeit zum Senden, Empfangen oder Senden und Empfangen von Datenpaketen (300) anzeigen, die den komprimierten Header aufweisen, und zwar während eines Assoziierungsprozesses mit dem drahtlosen Knoten, durch Nutzen eines Unterfelds in einem Fähigkeitsinformationselement des Headers; und/oder
wobei das erste Feld ein Rahmensteuerfeld aufweist und wobei mindestens ein Unterfeld des Rahmensteuerfelds anzeigt, dass der Header ein komprimierter Header ist, wobei das mindestens ein Unterfeld mindestens eines der Folgenden aufweist: Protokollversion, mehr Fragmente, mehr Daten oder Reihenfolge.

10. Drahtloses Gerät (700) nach Anspruch 8, wobei der Header ein zweites Feld aufweist, das anzeigend ist für einen Assoziierungskennzeichner eines drahtlosen Gerätes (202), wobei das drahtlose Gerät (202) eines der Folgendes ist: das drahtloses Gerät (700), der drahtlose Knoten und ein anderes drahtloses Gerät (202); und/oder
wobei der Header mindestens ein Adressfeld aufweist, das mindestens eine Adressfeld weist einen Hashwert einen Basisdienstsatzkennzeichners, auch Basic Service Set Identifier, des drahtlosen Knotens auf.

11. Drahtloses Gerät (700) nach Anspruch 8, wobei das Datenpaket eine Rahmenprüfsequenz aufweist, die mit den Daten verwürfelt ist, und für mindestens eines der Folgenden anzeigend ist: einen Basisdienstsatzkennzeichner des drahtlosen Knotens, eine Adresse des drahtlosen Knotens, eine Adresse des drahtlosen Geräts (700) oder einen Schlüsselwert, und
wobei sich der Schlüsselwert bevorzugt über Zeit verändert.

12. Drahtloses Gerät (700) nach Anspruch 8 oder Verfahren nach Anspruch 1, wobei das erste Feld anzeigt, dass eine Rahmenprüfsequenz des Datenpakets gekürzt ist.

13. Ein drahtloses Gerät (800) für drahtlose Kommunikation, das Folgendes aufweist, und war in einem drahtlosen Lokalgebietsnetzwerk, WLAN = Wireless Local Area Network:
Mittel zum Empfangen (805) eines Datenpakets von einem Gerät;
Mittel zum Verhandeln von Empfang von Datenpaketen (300), die einen komprimierten Kopf, auch Header, aufweisen, mit dem Gerät basierend auf Fähigkeiten, die mit dem Gerät ausgetauscht wurden und auf Verarbeiten von komprimierten Headern bezogen ist; und
Mittel zum Bestimmen (810), ob das Datenpaket einen komprimierten Header aufweist, und zwar basierend auf einem ersten Feld des Headers; und
Mittel zum Verarbeiten (815), wenn der der Header ein komprimierter Header ist, von Daten, die in dem Datenpaket empfangen wurden, gemäß einem Datenpaketformat, dass mit dem komprimierten Header assoziiert ist.

14. Drahtloses Gerät (800) nach Anspruch 13, wobei die Mittel zum Verarbeiten (815) konfiguriert sind zum Verarbeiten, und zwar wenn der Header ein komprimierter Header ist, des Datenpakets basierend auf dem komprimierten Header durch entwürfein einer Rahmenprüfsequenz des Headers, um mindestens eines der Folgenden zu identifizieren:
einen Basisdienstsatzkennzeichner, auch Basic Service Set Identifier, des Gerätes, eine Adresse des Gerätes, eine Adresse des drahtlosen Geräts (800), oder
eines Schlüsselwert, und wobei sich der Schlüsselwert bevorzugt über Zeit verändert; und/oder
weiterhin Mittel zum Bestimmen einer Zieladresse des Datenpakets basierend auf dem komprimierten Header aufweist.

15. Ein Computerporgrammpodukt für drahtlose Kommunikation in einen drahtlosen Lokalgebietsnetzwerk, WLAN = Wireless Local Area Network, das ein computerlesbares Medium aufweist, welches Instruktionen aufweist, die - wenn ausgeführt - ein drahtloses Gerät (202) veranlassen, die Schritte von einem der Ansprüche 1 - 7 oder 12 durchzuführen, wenn auf einem Computer ausgeführt.

## Revendications

1. Procédé de communication sans fil dans un réseau local sans fil, WLAN, mis en oeuvre par un dispositif sans fil (202), le procédé comprenant :
négocier la transmission de paquets de données(300) comprenant un entête compressé avec un noeud sans fil sur la base de capacités échangées avec le noeud sans fil et liées au traitement des entêtes compressés, et
produire (505) un paquet de données, le paquet de données comprenant un entête, l'entête comprenant un premier champ indiquant que l'entête est un entête compressé; et
transmettre (510) le paquet de données au noeud sans fil.

2. Procédé selon la revendication 1, comprenant en outre la transmission d'informations indicatives de la capacité à émettre, recevoir, ou émettre et recevoir des paquets de données (300) comprenant l'entête compressé pendant un processus d'association avec le noeud sans fil en utilisant un sous-champ dans un élément d'information de capacité de l'entête; et/ou
dans lequel le premier champ comprend unchamp de contrôle de trame, et dans lequel au moins un sous-champ du champ de contrôle de trame indique que l'entête est compressé, ledit au moins un sous-champ comprenant au moins l'un des sous-champs suivants : une version de protocole, d'avantage de fragments, d'avantage de données, ou un ordre.

3. Procédé selon la revendication 1, dans lequel l'entête comprend un second champ indicatif d'un identificateur d'association d'un dispositif sans fil (202), et dans lequel le dispositif sans fil (202) est l'un des suivants : un dispositif sans fil (202) et le noeud sans fil; et/ou
dans lequel l'entête comprend au moins un champ d'adresse, ledit au moins un champ d'adresse comprenant un hachage d'un identificateur d'ensemble de services de base du noeud sans fil.

4. Procédé selon la revendication 1, dans lequel le paquet de données comprend une séquence de vérification de trame brouillée par des données indicatives d'au moins l'un des éléments suivants : un identificateur d'ensemble de services de base du noeud sans fil, une adresse du noeud sans fil, une adresse d'un dispositif sans fil (202), ou une valeur de clé; et, de préférence
dans lequel la valeur de clé change au cours du temps.

5. Procédé de communication sans fil dans un réseau local sans fil, WLAN, mis en oeuvre par un dispositif sans fil (202), le procédé comprenant :
négocier la transmission de paquets de données (300) comprenant un entête compressé avec un dispositif sur la base de capacités échangées avec le dispositif et liées au traitement des entêtes compressés, et
recevoir (605) un paquet de données du dispositif ;
déterminer (615) si le paquet de données comprend un entête compressé sur la base d'un premier champ de l'entête ; et
si l'entête est un entête compressé, traiterdes données (620) reçues dans le paquet de données selon un format de paquet de données associé à l'entête compressé.

6. Procédé selon la revendication 5, comprenant en outre, si l'entête est un entête compressé, traiter le paquet de données sur la base de l'entête compressé en désembrouillant une séquence de vérification de trame de l'entête pour identifier au moins l'un des éléments suivants : un identificateur d'ensemble de services de base du dispositif, une adresse du dispositif, une adresse d'un dispositif sans fil (202), ou une valeur de clé ; et de préférence
dans lequel la valeur de clé change au cours du temps.

7. Procédé selon la revendication 5, comprenant en outre la détermination d'une adresse de destination du paquet de données sur la base de l'entête compressé.

8. Dispositif sans fil (700) pour une communication sans fil avec un réseau local sans fil, WLAN, comprenant :
des moyens pour négocier la transmission de paquets de données (300) comprenant un entête compressé avec un noeud sans fil sur la base des capacités échangés avec le noeud sans fil et associées au traitement des entêtes compressés; et
des moyens (705) pour générer un paquet de données, le paquet de données comprenant un entête, l'entête comprenant un premier champ indiquant que l'entête est un entête compressé; et
des moyens (710) pour transmettre le paquet de données au noeud sans fil.

9. Dispositif sans fil (700)selon la revendication 8, comprenant en outre des moyens pour la transmission d'informations indicatives de la capacité à émettre, recevoir, ou émettre et recevoir des paquets de données (300) comprenant l'entête compressé pendant un processus d'association avec le noeud sans fil en utilisant un sous-champ dans un élément d'information de capacité de l'entête; et/ou
dans lequel le premier champ comprend un champ de contrôle de trame, et dans lequel au moins un sous-champ du champ de contrôle de trame indique que l'entête est compressé, ledit au moins un sous-champ comprenant au moins l'un des sous-champs suivants : une version de protocole, d'avantage de fragments, d'avantage de données, ou un ordre.

10. Dispositif sans fil (700) selon la revendication 8, dans lequel l'entête comprend un second champ indicatif d'un identificateur d'association d'un dispositif sans fil (202) et dans lequel le dispositif sans fil (202) est l'un des suivantes :
le dispositif sans fil (700), le noeud sans fil, etun autre dispositif sans fil (202); et/ou
dans lequel l'entête comprend au moins un champ d'adresse, ledit au moins un champ d'adresse comprenant un hachage d'un identificateur d'ensemble de service de base du noeud sans fil.

11. Dispositif sans fil (700) selon la revendication 8, dans lequel le paquet de données comprend une séquence de vérification de trame brouillée par des données indicatives d'au moins l'un des éléments suivants : un identificateur d'ensemble de services de base du noeud sans fil, une adresse du noeud sans fil, une adresse du dispositif sans fil (700), ou une valeur de clé; et, de préférence
dans lequel la valeur de clé change au cours du temps.

12. Dispositif sans fil (202, 700) selon la revendication 8, ou procédé selon la revendication 1, dans lequel le premier champ indique qu'une séquence vérification de trame du paquet de données est tronquée.

13. Dispositif sans fil (800) pour communication sans fil comprenant un réseau local sans fil, WLAN, comprenant :
des moyens (805) pour recevoir un paquet de données d'un dispositif;
des moyens pour négocier la réception de paquets de données (300)comprenant une entête compressé, le dispositif étant basé sur les capacités échangées avec le dispositif et associées au traitement d'entêtes compressés; et
des moyens (810) pour déterminer si le paquet de données comprend un entête compressé basé sur un premier champ de l'entête; et
des moyens pour, si l'entête est un entête compressé, traiter (815) des données reçues dans le paquet de données selon un format de paquet de données associé à l'entête compressé.

14. dispositif sans fil (800) selon la revendication 13, dans lequel le moyen de traitement (815) est agencé pour, si l'entête est un entête compressé, traiter le paquet de données sur la base de l'entête compressé en désembrouillant une séquence de vérification de trame de l'entête pour identifier au moins l'un des éléments suivants : un identificateur d'ensemble de service de base du dispositif, une adresse du dispositif, une adresse du dispositif sans fil (800), ou une valeur de clé et, de préférence
dans lequel la valeur de clé change au cours du temps ; et/ou
comprenant en outre des moyens pour déterminer une adresse de destination du paquet de données sur la base de l'entête compressé.

15. Produit programme d'ordinateur pour communication sans fildans un réseau local sans fil, WLAN,comprenant un milieu lisible par ordinateur comprenant des instructions qui, quand elles sont exécutées, amènent un dispositif sans fil (202) à mettre en oeuvre les étapes de l'une quelconque des revendications 1 à 7 ou 12, quand elles sont exécutées sur un ordinateur.
